# EUROPÄISCHE PATENTSCHRIFT

(11) **EP 1 935 685 B1**
(45) Veröffentlichungstag und Bekanntmachung des Hinweises auf die Patenterteilung: **27.01.2016**
(21) Anmeldenummer: 07022424.1
(22) Anmeldetag: 19.11.2007
(51) Int. Cl.: B60H 1/22, F23M 20/00, F24H 1/26

(54) **Fahrzeugheizgerät**
Vehicle heating device
Appareil de chauffage pour véhicule

(30) Priorität: 20.12.2006 DE 102006060388
(43) Veröffentlichungstag der Anmeldung: 25.06.2008
(73) Patentinhaber: Eberspächer Climate Control Systems GmbH & Co. KG, 73730 Esslingen (DE)
(72) Erfinder: Humburg, Michael, 73035 Göppingen (DE)
(74) Vertreter: RLTG

(56) Entgegenhaltungen:
- EP-A1- 1 327 542
- EP-A2- 0 287 923
- DE-A1- 3 713 448
- DE-A1- 3 713 476
- DE-A1- 3 839 242
- US-A- 4 147 134
- US-A1- 2004 262 077

## Beschreibung

Die vorliegende Erfindung betrifft ein Fahrzeugheizgerät gemäß dem Oberbegriff des Anspruchs 1, wie es beispielsweise als Standheizung oder Zuheizer eingesetzt werden kann. In einem derartigen Fahrzeugheizgerät wird Luft mit einem im Allgemeinen flüssigen Brennstoff nach dessen Verdampfung oder Zerstäubung gemischt und verbrannt. Die dabei entstehende heißen Verbrennungsprodukte strömen im Allgemeinen zunächst entlang eines Flammrohrs und werden dann durch den Bodenwandungsbereich eines im Wesentlichen topfartigen Wärmetauschergehäuses umgelenkt. Die Außenseite des Flammrohrs ist umgeben von einem Umfangswandungsbereich des Wärmetauschergehäuses, und zwischen dem Flammrohr und dem Umfangswandungsbereich ist ein Rückströmraum gebildet, in welchem die Verbrennungsprodukte zurück strömen und dabei Wärme auf das Wärmetauschergehäuse und das darin strömende zu erwärmende Medium übertragen.

Die verschiedenen in einem derartigen Fahrzeugheizgerät vorgesehenen Baugruppen, insbesondere auch das Gebläse, erzeugen im Verbrennungsbetrieb Geräusche. Diese Geräusche werden insbesondere auch durch die Verbrennungsabgase mittransportiert und sind deshalb insbesondere im Austrittsbereich der Verbrennungsabgase wahrnehmbar. Es ist daher bekannt, in dem Strömungsweg, welcher auf das Fahrzeugheizgerät folgt, einen Schalldämpfer vorzusehen, um das Geräuschniveau zu senken. Dies ist eine sehr kostenintensive und oftmals auch auf Grund der beengten Platzverhältnisse nur schwer zu realisierende Maßnahme.

Ein Fahrzeugheizgerät gemäß dem Oberbegriff des Anspruchs 1 ist aus der EP 1 327 542 A1 bekannt. Bei diesem bekannten Fahrzeugheizgerät ist in dem im Wesentlichen zylindrischen Schalldämpfungsraum eine Schalldämpfungsfunktionalität dadurch realisiert, dass in diesem Raum ein hohlzylindrisch gestaltetes Katalysatorelement vorgesehen ist.

Die EP 0 287 923 A2 offenbart ein Fahrzeugheizgerät, bei welchem eine Schalldämpfungsanordnung mit einem Absorptionsdämpfungsbereich und einem Reflexionsdämpfungsbereich vorgesehen ist.

Es ist die Aufgabe der vorliegenden Erfindung, ein Fahrzeugheizgerät vorzusehen, bei welchem in kompakter, gleichwohl effizienter Art und Weise das Geräuschniveau gesenkt ist.

Diese Aufgabe wird gelöst durch ein Fahrzeugheizgerät, umfassend einen Brennerbereich, welchem Brennstoff und Verbrennungsluft zur Verbrennung und Wärmeerzeugung zuzuführen sind, wobei bei der Verbrennung entstehende Verbrennungsprodukte entlang einer Innenseite eines rohrartigen Führungselements in einer ersten Strömungsrichtung strömen, ferner umfassend ein im Wesentlichen topfartiges Wärmetauschergehäuse mit einem Bodenwandungsbereich und einem Umfangswandungsbereich, wobei der Umfangswandungsbereich das Führungselement wenigstens bereichsweise umgibt und mit diesem einen Rückströmraum bildet, wobei an dem Wärmetauschergehäuse eine Schalldämpfungsanordnung vorgesehen ist, welche in Strömungsrichtung der Verbrennungsprodukte stromabwärts des Rückströmraums angeordnet ist und welche die den Rückströmraum verlassenden Verbrennungsprodukte vor dem Austritt aus dem Wärmetauschergehäuse durchströmen. Im Umfangswandungsbereich des Wärmetauschergehäuses ist ein Schalldämpfungsraum gebildet. Die Schalldämpfungsanordnung ist in den Bereich des Wärmetauschergehäuses integriert. Dies bedeutet einerseits, dass die entstehenden Geräusche sehr nahe an der Quelle gedämpft bzw. eliminiert werden, so dass deren weitere Ausbreitung praktisch nicht möglich ist. Dies wiederum ermöglicht es, eine sehr kompakte Ausgestaltung für die Schalldämpfungsanordnung zu wählen, so dass andererseits der gesamt benötigte Bauraum klein gehalten werden kann. Eine weitere Steigerung der Schalldämpfungswirkung wird dadurch erlangt, dass der Schalldämpfungsraum einen Reflexionsdämpfungsraumbereich umfasst, in welchem im Wesentlichen kein Schalldämpfungsmaterial vorgesehen ist, und einen Absorptionsdämpfungsraumbereich umfasst, in welchem das Schalldämpfungsmaterial vorgesehen ist. Erfindungsgemäß ist der Reflexionsdämpfungsraumbereich in Strömungsrichtung vor dem Absorptionsdämpfungsraumbereich angeordnet. Um die Effizienz der Reflexionsdämpfung zu steigern, ist weiter vorgesehen, dass wenigstens eine Eintrittsöffnung in den Reflexionsdämpfungsraumbereich führt und wenigstens eine Austrittsöffnung vom Refle-xionsdämpfungsraumbereich zum Absorptionsdämpfungsraumbereich führt, wobei die wenigstens eine Eintrittsöffnung und die wenigstens eine Austritts-öffnung bezüglich der ersten Strömungsrichtung seitlich zueinander versetzt liegen.

Vorzugsweise ist zum Bereitstellen einer möglichst großen Schalldämpfungsstrecke vorgesehen, dass die die Schalldämpfungsanordnung durchströmenden Verbrennungsprodukte im Wesentlichen in der ersten Strömungsrichtung strömen.

Um die Schalldämpfungseffizienz noch weiter steigern zu können, wird vorgeschlagen, dass der Schalldämpfungsraum wenigstens bereichsweise mit Schalldämpfungsmaterial gefüllt ist. Das Schalldämpfungsmaterial kann beispielsweise mit einem Schalldämpfungsrohr mit einer Vielzahl von Öffnungen und an einer Seite von Außenseite und Innenseite des Schalldämpfungsrohrs und Schall absorbierendem Material aufgebaut sein, wobei die Verbrennungsprodukte an der anderen Seite des Schalldämpfungsrohrs strömen.

Zur Verbindung des Rückströmraums mit der Schalldämpfungsanordnung wird vorgeschlagen, dass ein Überbrückungsströmungsraum den Rückströmraum und den Schalldämpfungsraum verbindet.

Dabei kann beispielsweise vorgesehen sein, dass der Überbrückungsströmungsraum wenigstens teilweise in einem Luftführungsgehäuse gebildet ist, in welchem die von einem Gebläse geförderte Luft zum Brennerbereich strömt.

Bei dem erfindungsgemäßen Aufbau kann weiter vorgesehen sein, dass das Wärmetauschergehäuse ein inneres topfartiges Gehäuseelement umfasst, welches in Verbindung mit dem rohrartigen Führungselement den Rückströmraum begrenzt, und ein äußeres topfartiges Gehäuseelement umfasst, an welchem die Schalldämpfungsanordnung vorgesehen ist.

Der Aufbau des erfindungsgemäßen Fahrzeugheizgerätes, insbesondere im Bereich des Wärmetauschergehäuses, kann dadurch vereinfacht werden, dass an dem äußeren topfartigen Gehäuseelement eine den Schalldämp-fungsraum wenigstens bereichsweise umgebende Wandung integral ausge-bildet ist.

Um die Möglichkeit zu schaffen, in dem Schalldämpfungsraum Schalldämpfungsmaterial anzuordnen, diesen also so zu gestalten, dass erforderlichenfalls Zugriff darauf genommen werden kann, wird weiter vorgeschlagen, dass der Schalldämpfungsraum durch ein an dem äußeren topfartigen Gehäuseelement festzulegendes deckelartiges Verschlusselement abgeschlossen ist.

Die vorliegende Erfindung wird nachfolgend mit Bezug auf die beiliegenden Figuren detailliert beschrieben. Es zeigen:
- Fig. 1: eine Längsschnittansicht eines erfindungsgemäß aufgebauten Fahrzeugheizgerätes;
- Fig. 2: eine Teil-Explosionsansicht des Wärmetauschergehäuses des Fahrzeugheizgerätes der Fig. 1, geschnitten längs einer Linie II - II in Fig. 4;
- Fig. 3: eine Teil-Explosionsansicht derjenigen Baugruppen des Fahrzeugheizgerätes der Fig. 1, welche in Fig. 2 nicht erkennbar sind;
- Fig. 4: eine Schnittansicht des Wärmetauschergehäuses, geschnitten längs einer Linie IV - IV in Fig. 2;
- Fig. 5: eine Schnittansicht des in Fig. 2 dargestellten Wärmetauschergehäuses, geschnitten längs einer Linie V - V in Fig. 2;
- Fig. 6: eine der Fig. 4 entsprechende Ansicht einer alternativen Ausgestaltungsform;
- Fig. 7: eine Schnittansicht eines zum Abschließen eines Schalldämpfungsraums eingesetzten deckelartigen Verschlusselements;
- Fig. 8: das in Fig. 7 gezeigte Verschlusselement, geschnitten längs einer Linie VIII-VIII in Fig. 7;
- Fig. 9: eine Explosionsansicht des in einem Schalldämpfungsraumbereich des Fahrzeugheizgerätes der Fig. 1 angeordneten Schalldämpfungsmaterials;
- Fig. 10: das Schalldämpfungsmaterial der Fig. 9 im zusammengefügten Zustand;
- Fig. 11: eine Schnittansicht des Schalldämpfungsmaterials der Fig. 10, geschnitten längs einer Linie XI -XI in Fig. 10;
- Fig. 12: eine Schnittansicht des in Fig. 11 dargestellten Schalldämpfungsmaterials, geschnitten längs einer Linie XII -XII in Fig. 11.

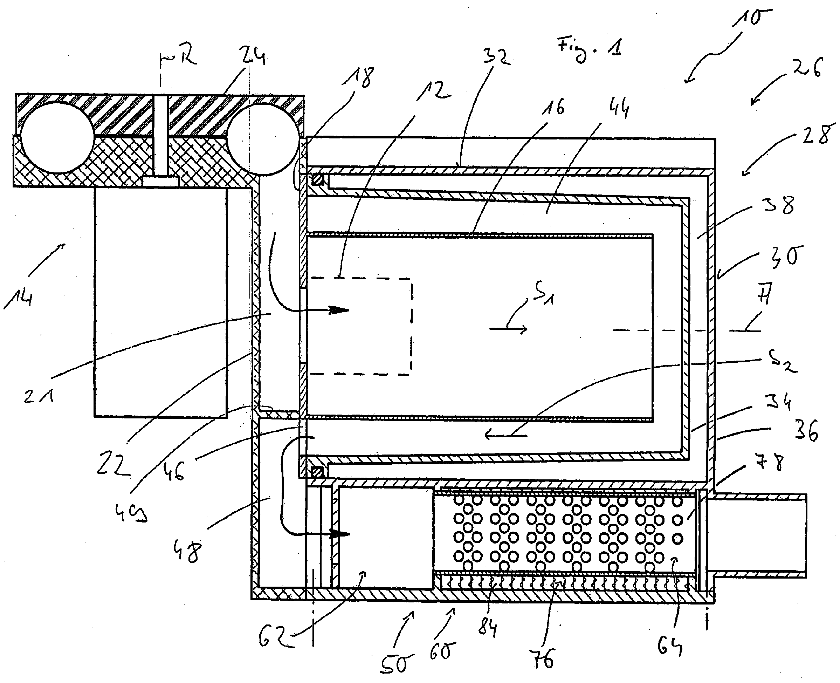

In Fig. 1 ist ein erfindungsgemäß aufgebautes Fahrzeugheizgerät, wie es beispielsweise als Standheizung oder Zuheizer eingesetzt werden kann, allgemein mit 10 bezeichnet. Das Standheizgerät 10 umfasst einen Brennerbereich 12, der hier nur schematisch dargestellt ist. Der Brennerbereich 12 kann eine Brennkammer umfassen, in welche die von einem Verbrennungsluftgebläse 14 geförderte Luft und auch durch eine Dosierpumpe oder dergleichen geförderter zunächst flüssiger Kraftstoff eingeleitet werden. Der Kraftstoff wird verdampft oder zerstäubt und zusammen mit der Verbrennungsluft verbrannt. Die Verbrennungsabgase strömen dann entlang eines allgemein mit 16 bezeichneten Flammrohrs, das ein langgestrecktes, rohrartiges Führungselement für die Verbrennungsprodukte, also die Verbennungsabgase, bildet.

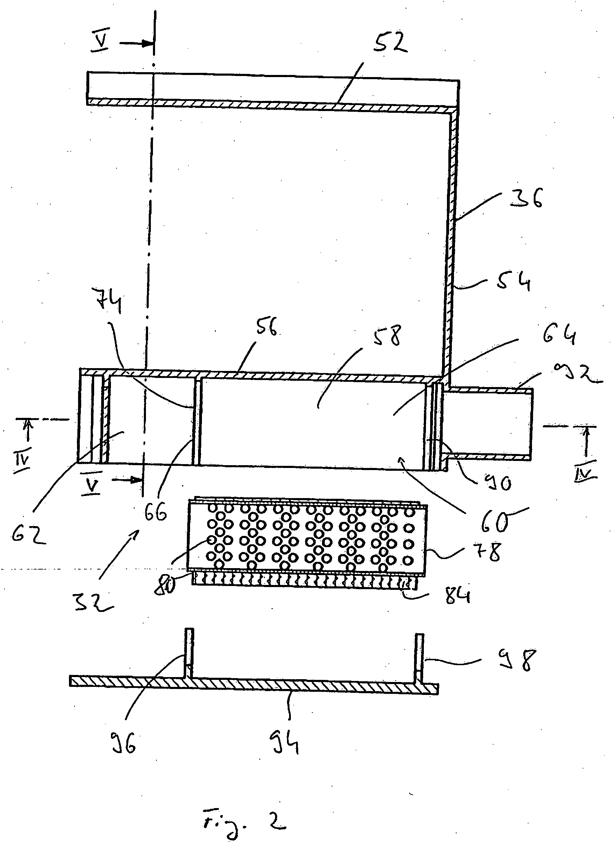

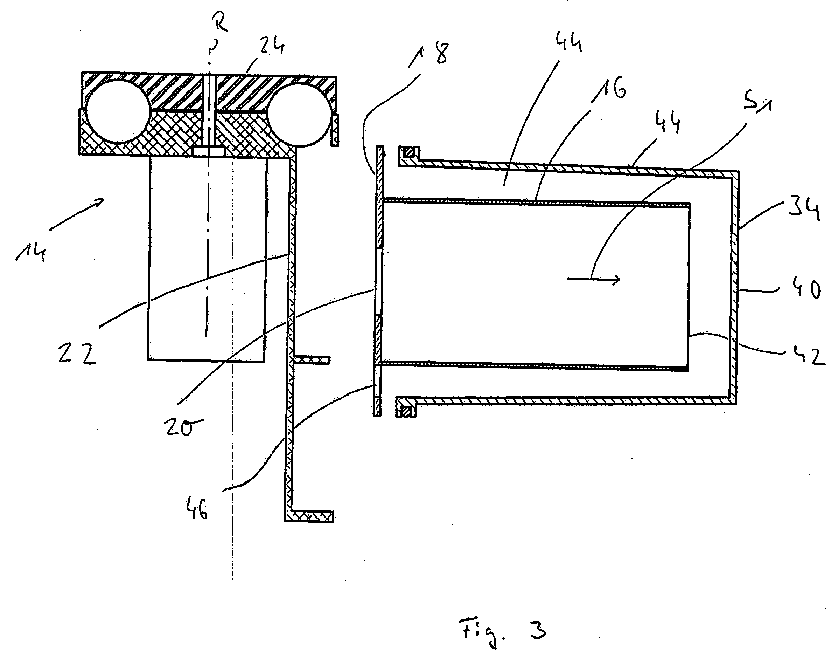

Bei dem in Fig. 1 im Zusammenbau und in den Fig. 2 und 3 jeweils in Explosionsansicht dargestellten Fahrzeugheizgerät 10 ist das Flammrohr 16 integral ausgebildet mit einem Boden 18, durch dessen Öffnung 20 hindurch die in einem Luftführungsgehäuse 22 strömende Luft in den Brennerbereich 12 eintritt, wie in Fig. 1 durch einen Pfeil angedeutet. Die Luft wird durch das als Seitenkanalgebläse ausgebildete Gebläse 14 gefördert. Es ist selbstverständlich, dass die Einleitung der Luft in den Brennerbereich 12 unter Einsatz von Drallelementen, eines in den Brennerbereich bzw. die Brennkammer hineinragenden Lufteinleitstutzens oder dergleichen erfolgen kann. Auch ist es selbstverständlich, dass die räumliche Lagezuordnung des Gebläses 14 zu den verbleibenden Baugruppen anders sein kann und beispielsweise die Rotationsachse R des Förderrads 24 des Gebläses 14 sich in der gleichen Richtung erstrecken kann, wie eine Längsmittenachse A des Fahrzeugheizgerätes 10.

Um die im Brennerbereich 12 erzeugte Wärme auf ein zu erwärmendes Medium, also beispielsweise Wasser, übertragen zu können, weist das Fahrzeugheizgerät 10 ferner einen Wärmetauscherbereich 26 auf. Dieser umfasst ein allgemein mit 28 bezeichnetes Wärmetauschergehäuse mit einem Bodenwandungsbereich 30 und einem Umfangswandungsbereich 32. Wie man den Explosionsansichten der Fig. 2 und 3 deutlich entnehmen kann, ist das Wärmetauschergehäuse 28 mit einem inneren topfartigen Gehäuseelement 34 (siehe Fig. 3) und einem äußeren topfartigen Gehäuseelement 36 (siehe Fig. 2) ausgebildet. Diese beiden topfartigen Gehäuseelemente 34, 36 erzeugen im zusammengefügten Zustand des Wärmetauschergehäuses 28 einen doppelwandigen Aufbau mit einem darin gebildeten Strömungsraum 38 für das zu erwärmende Medium.

Das innere topfartige Gehäuseelement 34 liegt mit einer Bodenwandung 40 einer axialen Öffnung 42 des Flammrohrs 16 gegenüber. Eine Umfangswandung 44 des inneren topfartigen Gehäuseelements 34 umgibt mit Abstand das Flammrohr 16 und bildet somit mit diesem einen Rückströmraum 44 für die Verbrennungsprodukte. Diese strömen, nachdem sie den Brennerbereich 12 beispielsweise über einen Flammblende oder dergleichen verlassen haben, entlang der Innenseite des Flammrohrs 16, treten aus der axialen Öffnung 42 aus und treffen auf die Bodenwandung 40 des inneren topfartigen Gehäuseelements 34. Dort werden die Verbrennungsprodukte nach radial außen umgelenkt und treten dann in den ringartigen Rückströmraum ein. Dabei strömen die Verbrennungsprodukte im Flammrohr 16 im Wesentlichen in einer ersten Strömungsrichtung S₁, wobei diese erste Strömungsrichtung S₁ lediglich eine generelle Strömungsrichtung bezeichnet. Selbstverständlich können hier auch durch Verwirbelungs- oder Dralleffekte Spiralströmungen entstehen, die sich allgemein jedoch in dieser ersten Strömungsrichtung S₁ bewegen. Nach der Umlenkung an der Bodenwandung 40 und dem Eintritt in den Rückströmraum 44 bewegen sich die Verbrennungsprodukte dann allgemein in einer zweiten Strömungsrichtung S₂ welche der ersten Strömungsrichtung S₁ im Wesentlichen entgegengesetzt gerichtet ist. Auch hier sei darauf hingewiesen, dass beispielsweise durch Umlenkelemente oder dergleichen auch hier eine Zirkular- oder Spiralströmung erzeugt werden kann, deren allgemeine Strömungsrichtung jedoch in Richtung der zweiten Strömungsrichtung S₂ ist. Vor allem bei der Strömung entlang der Innenseite des inneren topfartigen Gehäuseelements 34 übertragen die heißen Verbrennungsprodukte Wärme auf das Wärmetauschergehäuse 28. Diese Wärme nimmt zumindest zum Teil das im Strömungsraum 38 strömende Medium auf.

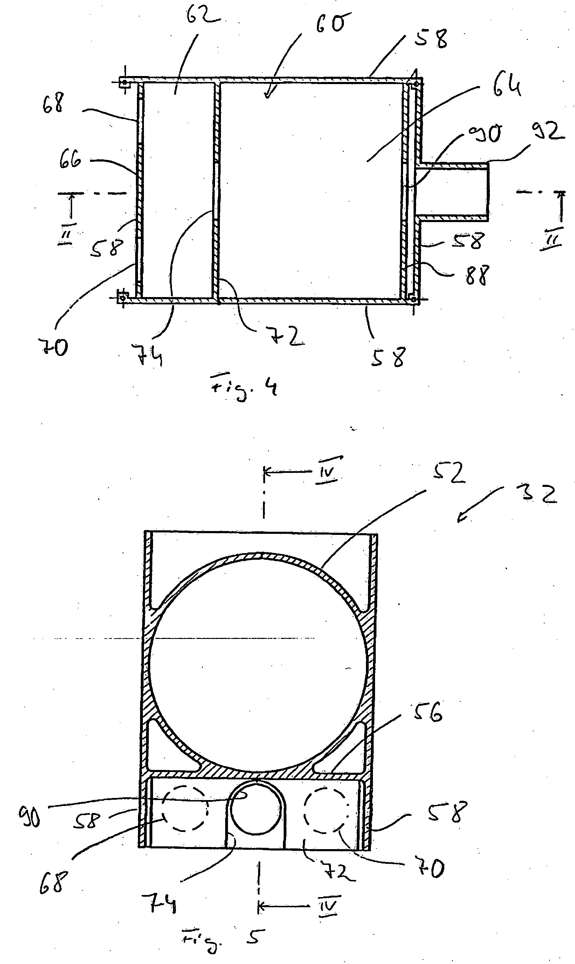

Um einen Austritt der Verbrennungsprodukte aus dem Rückströmraum 44 zu ermöglichen, ist im Boden 18 an einem Umfangsbereich eine Durchtrittsöffnung 46 vorgesehen. Über diese Durchtrittsöffnung 46 gelangen die Verbrennungsprodukte in einen Überbrückungsraum 48, der im Wesentlichen im Luftführungsgehäuse 22 gebildet ist. Um ein Rückströmen der Verbrennungsprodukte in denjenigen Luftströmungsraum 21 im Luftführungsgehäuse 22, in welchem die Verbrennungsluft in Richtung zum Brennerbereich 12 strömt, zu verhindern, ist der Überbrückungsraum 48 durch eine an dem Boden 18 anliegende Trennwand 49 vom Luftströmungsraum 21 getrennt. In diesem Überbrückungsraum 48 findet eine erneute Umlenkung der Strömung statt, und zwar zunächst nach radial außen und dann in eine Strömungsrichtung, welche näherungsweise der ersten Strömungsrichtung S₁ entspricht. Dabei gelangen die Verbrennungsrodukte in den Bereich einer allgemein mit 50 bezeichneten Schalldämpfungsanordnung, die bei dem erfindungsgemäßen Fahrzeugheizgerät 10 in die Wärmetauscheranordnung 26, insbesondere das Wärmetauschergehäuse 28, integriert ist. Diese Schalldämpfungsanordnung 50 liegt im Bereich des Umfangswandungsbereichs 32 des Wärmetauschergehäuses 28. Dies wird im Folgenden auch mit Bezug auf die Fig. 4 und 5 detaillierter erläutert.

So erkennt man beispielsweise in Fig. 5, dass das äußere topfartige Wärmetauschergehäuse 36 mit einer beispielsweise im Schnitt kreisrund ausgestalteten Umfangswandung 52 ausgebildet ist, die, wie die Fig. 2 dies zeigt, in eine Bodenwandung 54 übergeht bzw. mit dieser fest verbunden oder integral ausgebildet ist. An einer Seite ist im Bereich der Umfangswandung 52 durch die Bereitstellung integral damit ausgebildeter Wandbereiche 56 und 58 ein allgemein mit 60 bezeichneter Schalldämpfungsraum gebildet. Dieser ist durch die Ausgestaltung der Wandungen 56 und 58 näherungsweise quaderartig und in Richtung der Längsmittenachse A langgestreckt.

Der Schalldämpfungsraum 60 selbst ist unterteilt in einen Reflexionsdämpfungsraumbereich 62 und einen Absorptionsdämpfungsraumbereich 64. Die aus dem Überbrückungsraum 48 austretenden Verbrennungsprodukte gelangen also zunächst durch zwei in einer Eintrittswandung 66, welche Teil des Wandbereichs 58 ist, seitlich nebeneinander gebildete Öffnungen 68, 70 in den Reflexionsdämpfungsraumbereich 62, durchströmen diesen unter zwangsweiser Umlenkung und gelangen durch eine in einer Trennwandung 72 gebildete Austrittsöffnung 74 in den Absorptionsdämpfungsraumbereich 64. Die beiden Eintrittsöffnungen 68 und 70 sind bezüglich der Austrittsöffnung 72 so positioniert, dass ein direkter Schalldurchtritt praktisch nicht möglich ist.

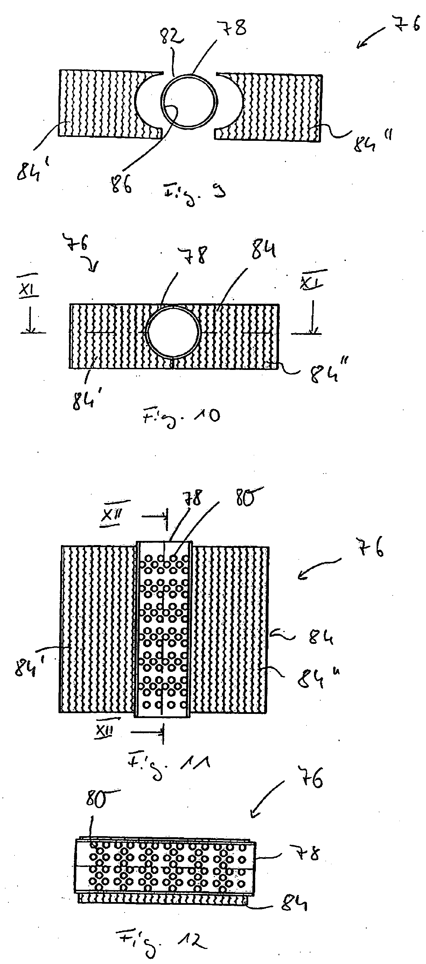

Im Absoptionsdämpfungsraumbereich 64 ist in den Fig. 9 bis 12 detaillierter dargestelltes Schalldämpfungsmaterial 76 angeordnet. Dieses umfasst ein langgestrecktes Schalldämpfungsrohr 78, dessen Gesamtlänge näherungsweise der Länge des Absorptionsdämpfungsraumbereichs 64 entspricht und das, wie die Fig. 11 und 12 deutlich zeigen, eine Vielzahl von Öffnungen 80 aufweist. An seiner Außenseite 82 ist dieses Schalldämpfungrohr 78 umgeben bzw. eingebettet in Absorptionsmaterial 84, das im dargestellten Beispiel aus zwei Blöcken zusammengefügt sein kann. Dieses Absorptionsmaterial 84 kann jedwedes Schall absorbierende Material, also beispielsweise faserartiges Material, wie Glaswolle oder Steinwolle, lamellenartige Material, Styropor oder dergleichen umfassen. Von Bedeutung ist, dass auf Grund des Einsatzes im Bereich eines Fahrzeugheizgerätes 10 dieses Absorptionsmaterial 84 eine ausreichende Wärmefestigkeit aufweisen muss. In seiner Außenkontur ist insbesondere durch die Ausgestaltung des Absorptionsmaterials 84 das Schalldämpfungsmaterial 76 so gestaltet, dass es den Absorptionsdämpfungsraumbereich 64 im Wesentlichen vollständig ausfüllt, so dass der zur Verfügung stehende Bauraum sehr effizient genutzt wird. Man erkennt, dass das absorbierende Material 84 im dargestellten Beispiel mit zwei Teilen 84' und 84" aufgebaut ist, die an ihren einander zugewandt zu positionierenden Bereichen konkav gestaltet sind, um das Schalldämpfungsrohr 78 zwischen sich aufnehmen zu können und dieses vollständig zu umkapseln. Dabei liegt das absorbierende Material 84 vorzugsweise vollständig auf dem Schallabsorptionstohr 78 auf und liegt weiterhin vorzugsweise vollständig an den Wandungen 56 und 58 an. Das Schalldämpfungsrohr 78 liegt mit einem seiner Enden im Bereich der Austrittsöffnung 74, so dass die den Reflexionsdämpfungsraumbereich 62 verlassenden Verbrennungsprodukte in das Schalldämpfungsrohr 78 eintreten und entlang dessen Innenseite 86 strömen. An seinem anderen Ende ist der Absorptionsdämpfungsraumbereich 64 durch eine Endwand 88 begrenzt, in welcher eine weitere Austrittsöffnung 90 vorgesehen ist. Durch diese Austrittsöffnung 90 hindurch gelangen die Verbrennungsprodukte zu einem in der Wandung 58 vorgesehenen Austrittsstutzen 92, an welchen ein weiteres Verbrennungsproduktführungssystem angeschlossen werden kann, um die Verbrennungsprodukte dann beispielsweise zur Umgebung hin abzugeben.

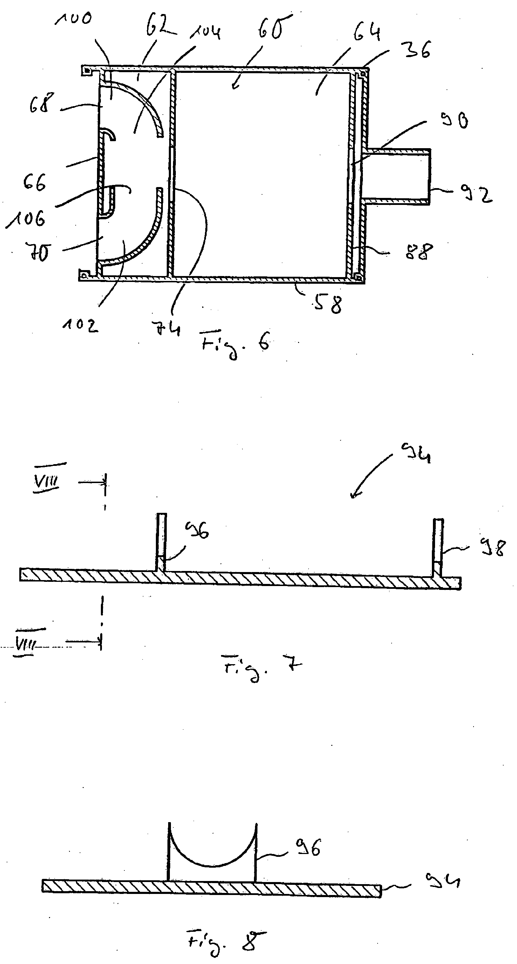

Da der Schalldämpfungsraum 60 der Schalldämpfungsanordnung 50 durch die Wandungen 58, diese umfassend auch die Eintrittswandung 66, und 56 nicht vollständig abgeschlossen ist, ist weiterhin ein als Verschlusselement wirkender Deckel 94 vorgesehen. Dieser kann so geformt sein, dass er auf der Wandung 58 vollständig aufliegt und somit den Absorptionsraum 60 vollständig abschließt. Der in den Fig. 7 und 8 gezeigte Deckel 94 weist zwei Haltestege 96, 98 auf, deren gegenseitiger Abstand näherungsweise der Länge des Schalldämpfungsrohrs 78 entspricht. Dieses steht, wie vor allem in Fig. 2 auch erkennbar, an seinen beiden Enden über das Absorptionsmaterial 84 über, so dass die beiden Stege, das Absorptionsmaterial 84 zwischen sich aufnehmend, das Schalldämpfungsrohr 78 übergreifen und dieses festlegen. Dabei sind die Stege 96, 98 so positioniert, dass sie bei am äußeren topfartigen Gerhäuseelement 36 angebrachtem Deckel 94 in die nach radial außen offenen Öffnungen 74 bzw. 90 eingreifen und somit einen kreisartigen Umschluss der beiden auch in diese Öffnungen 74, 90 ragenden Enden des Schallabsorptionsrohres 78 erzeugen. Der Deckel 94 kann beispielsweise durch Verschraubung in seinen vier Eckenbereichen mit der am äußeren topfartigen Gehäuseelement 36 integral ausgebildeten Wandung 58 fest verbunden werden. Um einen ungewünschten Austritt von Verbrennungsprodukten zu vermeiden, kann hier ein Dichtungselement dazwischen gelegt sein.

Aus der vorangehenden Beschreibung erkennt man also, dass bei dem erfindungsgemäß aufgebauten Fahrzeugheizgerät 10 die Verbrennungsprodukte, nachdem sie den Brennerbereich 12 und das Flammrohr 16 verlassen haben, zunächst entlang der Innenoberfläche des Wärmetauschergehäuses 28 strömen, um auf diese Art und Weise Wärme abzugeben und diese auf das zu erwärmende Medium zu übertragen. Nach dem Verlassen des Rückströmraums 44 und dem Durchströmen des Überbrückungsraums 48 gelangen bei dem erfindungsgemäß aufgebauten Fährzeugheizgerät 10 die Verbrennungsprodukte nicht in ein weiter angeschlossenes Abgasführungsrohr, sondern gelangen in den im Wärmetauschergehäuse 28 ausgebildeten Schalldämpfungsraum 60. Da dieser näherungsweise die gleiche axiale, Erstreckungslänge aufweist, wie der Rückströmraum 44 bzw. wie das Wärmetauschergehäuse 28 wird eine vergleichsweise lange Strömungwegstrecke bereitgestellt, in deren Bereich zur Schalldämpfung beigetragen wird. Da der Schalldämpfungsraum 60 in die beiden Raumbereiche 62 und 64 untergliedert ist, in welchen einerseits durch Reflexion von Schallwellen und andererseits durch Absorption von Schallwellen zur Schalldämpfung beigetragen wird, wird eine sehr effiziente Minderung des Geräuschniveaus erlangt.

Eine Abwandlung des erfindungsgemäßen Fahrzeugheizgerätes 10 bzw. des äußeren topfartigen Gehäuses 36 ist in Fig. 6 gezeigt. Man erkennt hier wieder den Schalldämpfungsraum 60 mit seinen beiden Raumbereichen 62 und 64. Bei dieser Ausgestaltungsform erstrecken sich von den jeweiligen Eintrittsöffnungen 68, 70 gekrümmte rohrleitungsartige Führungsabschnitte 100, 102, welche im Bereich der Austrittsöffnung 74 mit jeweiligen Öffnungen 104, 106 einander gegenüber liegen. Die durch die Eintrittsöffnungen 68, 70 eintretenden Verbrennungsprodukte werden hier also entlang einer gekrümmten Strömungsbahn umgelenkt, wobei vor allem durch die dazu dienenden gekrümmten Oberflächen ein effizienter Beitrag zur Reflexionsdämpfung geleistet wird.

Es ist selbstverständlich, dass das erfindungsgemäß aufgebaute Fahrzeugheizgerät insbesondere hinsichtlich der Ausgestaltung der Schalldämpfungsanordnung 50 und der mit dieser in Wechselwirkung tretenden Komponenten anders ausgeführt sein kann, als gezeigt. So können beispielsweise die beiden Raumbereiche 62 und 64 durch mehr als eine Öffnung miteinander in Verbindung stehen. Auch können mehr als die zwei gezeigten Eintrittsöffnungen vorgesehen sein. Auch eine einzige Eintrittsöffnung kann vorgesehen sein, welche dann bezüglich einer einzigen oder ggf. mehreren Austrittsöffnungen versetzt liegen sollte. Weiterhin ist es selbstverständlich, dass das Schalldämpfungsmaterial 76 mehr als ein Schallldämpfungsrohr 78 umfassen kann. Beispielsweise könnten zwei derartige Schalldämpfungsrohre 78 nebeneinander liegend in das Absoprtionsmaterial 84 eingebettet sein. Des Weiteren sei darauf hingewiesen, dass, obgleich die Ausgestaltung insbesondere der Wandung 58 als integraler Bestandteil des äußeren topfartigen Gehäuseelements 36 vorteilhaft ist, selbstverständlich diese Verbindung auch durch Verschraubung erfolgen könnte. Das äußere topfartige Gehäuseelement 36 kann beispielsweise als Aluminiumdruckgussteil hergestellt sein, ebenso wie das innere topfartige Gehäuseelement 34. Selbiges gilt für den Deckel 94. Weiter ist es selbstverständlich, dass in Strömungsrichtung auch die beiden Raumbereiche 62, 64 bezüglich einander vertauscht liegen können, also zunächst der Absorptionsdämpfungsraumbereich 64 durchströmt wird und dann der Reflexionsdämpfungsraumbereich 62. Auch-ist ist denkbar, den Schalldämpfungsraum 60 vollständig als Absorptionsdämpfungsraumbereich oder vollständig als Reflexionsdämpfungsraumbereich auszugestalten.

## Patentansprüche

1. Fahrzeugheizgerät, umfassend einen Brennerbereich (12), welchem Brennstoff und Verbrennungsluft zur Verbrennung und Wärmeerzeugung zuzuführen sind, wobei bei der Verbrennung entstehende Verbrennungsprodukte entlang einer Innenseite eines rohrartigen Führungselements (16) in einer ersten Strömungsrichtung (S₁) strömen, ferner umfassend ein im Wesentlichen topfartiges Wärmetauschergehäuse (28) mit einem Bodenwandungsbereich (30) und einem Umfangswandungsbereich (32), wobei der Umfangswandungsbereich (32) das Führungselement (16) wenigstens bereichsweise umgibt und mit diesem einen Rückströmraum (44) bildet, wobei an dem Wärmetauschergehäuse (28) eine Schalldämpfungsanordnung (50) vorgesehen ist, welche in Strömungsrichtung der Verbrennungsprodukte stromabwärts des Rückströmraums (44) angeordnet ist und welche die den Rückströmraum (44) verlassenden Verbrennungsprodukte vor dem Austritt aus dem Wärmetauschergehäuse (28) durchströmen, wobei im Umfangswandungsbereich (32) des Wärmetauschergehäuses (28) ein Schalldämpfungsraum (60) gebildet ist, wobei
der Schalldämpfungsraum (60) einen Reflexionsdämpfungsraumbereich (62) umfasst, in welchem im Wesentlichen kein Schattdämpfungsmaterial (76) vorgesehen ist, und einen Absorptionsdämpfungsraumbereich (64) umfasst, in welchem das Schalldämpfungsmaterial (76) vorgesehen ist, **dadurch gekennzeichnet, dass**
der Reflexionsdämpfungsraumbereich (62) in Strömungsrichtung vor dem Absorptionsdämpfungsraumbereich (64) angeordnet ist, und dass wenigstens eine Eintrittsöffnung (68, 70) in den Reflexionsdämpfungsraumbereich (62) führt und wenigstens eine Austrittsöffnung (74) vom Reflexionsdämpfungsraumbereich (62) zum Absorptionsdämpfungsraumbereich (64) führt, wobei die wenigstens eine Eintrittsöffnung (68, 70) und die wenigstens eine Austrittsöffnung (74) bezüglich der ersten Strömungsrichtung (S₁) seitlich zueinander versetzt liegen.

2. Fahrzeugheizgerät nach Anspruch 1,
**dadurch gekennzeichnet, dass** die die Schalldämpfungsanordnung (50) durchströmenden Verbrennungsprodukte im Wesentlichen in der ersten Strömungsrichtung (S₁) strömen.

3. Fahrzeugheizgerät nach einem der vorangehenden Ansprüche,
**dadurch gekennzeichnet, dass** der Schalldämpfungsraum (60) wenigstens bereichsweise mit Schalldämpfungsmaterial (76) gefüllt ist.

4. Fahrzeugheizgerät nach Anspruch 3,
**dadurch gekennzeichnet, dass** das Schalldämpfungsmäterial (76) ein Schalldämpfungsrohr (78) mit einer Vielzahl von Öffnungen (80) und an einer Seite von Außenseite (82) und Innenseite (86) des Schalldämpfungsrohrs (78) Schall absorbierendes Material (84) umfasst, wobei die Verbrennungsprodukte an der anderen Seite des Schalldämpfungsrohrs (78) strömen.

5. Fahrzeugheizgerät nach einem der Ansprüche 1 bis 4,
**dadurch gekennzeichnet, dass** ein Überbrückungsströmungsraum (48) den Rückströmraum (44) und den Schalldämpfungsraum (60) verbindet.

6. Fahrzeugheizgerät nach Anspruch 5,
**dadurch gekennzeichnet, dass** der Überbrückungsströmungsraum (48) wenigstens teilweise in einem Luftführungsgehäuse (22) gebildet ist, in welchem die von einem Gebläse (14) geförderte Luft zum Brennerbereich (12) strömt.

7. Fahrzeugheizgerät nach einem der vorangehenden Ansprüche,
**dadurch gekennzeichnet, dass** das Wärmetauschergehäuse (28) ein inneres topfartiges Gehäuseelement (34) umfasst, welches in Verbindung mit dem rohrartigen Führungselement (16) den Rückströmraum (44) begrenzt, und ein äußeres topfartiges Gehäuseelement (36) umfasst, an welchem die Schalldämpfungsanordnung (50) vorgesehen ist.

8. Fahrzeugheizgerät nach Anspruch 7,
**dadurch gekennzeichnet, dass** an dem äußeren topfartigen Gehäuseelement (36) eine den Schalldämpfungsraum (60) wenigstens bereichsweise umgebende Wandung (56, 58) integral ausgebildet ist.

9. Fahrzeugheizgerät nach Anspruch 8,
**dadurch gekennzeichnet, dass** der Schalldämpfungsraum (60) durch ein an dem äußeren topfartigen Gehäuseelement (36) festzulegendes deckelartiges Verschlusselement (94) abgeschlossen ist.

## Claims

1. Vehicle heating device, comprising a burner section (12) to which fuel and combustion air have to be supplied for combustion and the generation of heat, wherein combustion products developing during combustion flow along an inner side of a tubular guiding element (16) in a first flow direction (S₁), further comprising a substantially pot-like heat exchanger housing (28) with a bottom wall section (30) and a circumferential wall section (32), the circumferential wall section (32) surrounding at least partly a guiding element (16) and forming a backflow space (44) with the latter, a silencer arrangement (50) being provided at the heat exchanger housing (28) which is arranged downstream of the backflow space (44) in the flow direction of the combustion products and through which the combustion products leaving the backflow space (44) flow before leaving the heat exchanger housing (28), wherein a sound absorption space (60) is formed in the circumferential wall section (32) of the heat exchanger housing (28), wherein
the sound absorption space (60) comprises a reflection loss space portion (62), where there is substantially no sound absorption material (76), and an absorption loss space portion (64) where sound absorption material (76) is provided, **characterized by**
the reflection loss space portion (62) being arranged prior to the absorption loss space portion (64) in the flow direction and by at least one inlet opening (68, 70) leading into the reflection loss space portion (62) and by at least one outlet opening (74) leading from the reflection loss space portion (62) to the absorption loss space portion (64), wherein the at least one inlet opening (68, 70) and the at least one outlet opening (74) being laterally offset relative to one another in relation to the first flow direction (S₁).

2. Vehicle heating device according to claim 1,
**characterized by** the combustion products flowing through the sound absorption arrangement (50) substantially flowing in the first flow direction (S₁).

3. Vehicle heating device according to one of the preceding claims,
**characterized by** the sound absorption space (60) being at least partly filled with sound absorption material (76).

4. Vehicle heating device according to claim 3,
**characterized by** the sound absorption material (76) comprising a sound absorption tube (78) with a plurality of openings (80) and at one side out of outside (82) and inside (86) of said sound absorption tube (78) sound absorbing material (84), wherein the combustion products flow on the other side of the sound absorption tube (78).

5. Vehicle heating device according to one of claims 1 to 4,
**characterized by** a bridging flow space (48) connecting the reflux space (44) and the sound absorption space (60).

6. Vehicle heating device according to claim 5,
**characterized by** the bridging flow space (48) being at least partly formed in an air guide housing (22), where the air transported by a blower (14) flows towards the burner section (12).

7. Vehicle heating device according to one of the preceding claims,
**characterized by** the heat exchanger housing (28) comprising an inner pot-like housing element (34), which defines the backflow space (44) together with the tubular guiding element (16), and an outer pot-like housing element (36) whereon the sound absorption arrangement (50) is provided.

8. Vehicle heating device according to claim 7,
**characterized by** a wall (56, 58), which at least partly surrounds the sound absorption space (60), being integrally formed at the outer pot-like housing element (36).

9. Vehicle heating device according to claim 8,
**characterized by** the sound absorption space (60) being closed by a cover-shaped closure element (94) to be fitted at the outer pot-like housing element (36).

## Revendications

1. Dispositif de chauffage pour un véhicule, comprenant une zone de brûleur (12) qui doit être alimentée en combustible et en air de combustion pour la combustion et la génération de chaleur, où des produits de combustions générés pendant la combustion circulent le long d'un côté intérieure d'un élément de guidage (16) tubulaire dans une première direction de circulation (S₁), comprenant en outre un boîtier d'échangeur de chaleur (28) essentiellement en forme de pot, avec une zone de paroi de fond (30) et une zone de paroi circonférentielle (32), la zone de paroi circonférentielle (32) entourant au moins en partie l'élément de guidage (16) et formant avec ce dernier un espace de reflux (44), un arrangement d'insonorisation (50) étant prévu au boîtier d'échangeur de chaleur (28) qui est arrangé en aval de l'espace de reflux (44) dans la direction de circulation des produits de combustion et à travers duquel les produits de combustion quittant l'espace de reflux (44) passent avant de s'échapper du boîtier d'échangeur de chaleur (28), un espace d'insonorisation (60) étant formé dans la zone de paroi circonférentielle (32) de boîtier (28), l'espace d'insonorisation (60) comprenant une zone d'espace d'affaiblissement de réflexion (62) où il n'a y essentiellement pas de matériel d'insonorisation (76) et une zone d'espace d'affaiblissement d'absorption (64), où le matériel d'insonorisation (76) est prévu,
**caractérisé par** la zone d'espace d'affaiblissement de réflexion (62) étant arrangée en amont de la zone d'espace d'affaiblissement d'absorption (64) en direction de la circulation et par au moins une ouverture d'entrée (68, 70) menant dans la zone d'espace d'affaiblissement de réflexion (62) et au moins une ouverture de sortie (74) menant de la zone d'espace d'affaiblissement de réflexion (62) à la zone d'espace d'affaiblissement d'absorption (64), ladite au moins une ouverture d'entrée (68, 70) et ladite au moins une ouverture de sortie (74) étant décalées l'une par rapport à l'autre en relation à la première direction de circulation (S₁).

2. Dispositif de chauffage pour un véhicule selon la revendication 1, **caractérisé par** les produits de combustion qui passent à travers l'arrangement d'insonorisation (50) circulant essentiellement dans la première direction de circulation (S₁).

3. Dispositif de chauffage pour un véhicule selon une des revendications précédentes, **caractérisé par** l'espace d'insonorisation (60) étant au moins partiellement rempli par du matériel d'insonorisation (76).

4. Dispositif de chauffage pour un véhicule selon la revendication 3, **caractérisé par** le matériel d'insonorisation (76) comprenant un tuyau d'insonorisation (78) avec une pluralité d'ouvertures (80) et comprenant à un côté de côté extérieur (82) et côté intérieur (86) du tuyau d'insonorisation (78) du matériel d'insonorisation (84), les produits de combustion circulant à l'autre côté du tuyau d'insonorisation (78).

5. Dispositif de chauffage pour un véhicule selon une des revendications 1 à 4, **caractérisé par** un espace de circulation de pontage (48) liant l'espace de reflux (44) et l'espace d'insonorisation (60).

6. Dispositif de chauffage pour un véhicule selon la revendication 5, **caractérisé par** l'espace de circulation de pontage (48) étant au moins partiellement formé dans un boîtier de guidage d'air (22), où l'air transporté par une soufflerie (14) circule vers la section de brûleur (12).

7. Dispositif de chauffage pour un véhicule selon une des revendications précédentes, **caractérisé par** le boîtier d'échangeur de chaleur (28) comprenant un élément de boîtier interne (34) en forme de pot qui, en association avec l'élément de guidage tubulaire (16), définit l'espace de reflux (44), et comprenant un élément de boîtier externe (36) en forme de pot où l'arrangement d'insonorisation (50) est prévu.

8. Dispositif de chauffage pour un véhicule selon la revendication 7, **caractérisé par** une paroi (56, 58) entourant l'espace d'insonorisation (60) au moins partiellement étant formée intégralement à l'élément de boîtier externe (36) en forme de pot.

9. Dispositif de chauffage pour un véhicule selon la revendication 8, **caractérisé par** l'espace d'insonorisation (60) étant fermé par un élément de fermeture (94) formant couvercle qui doit être fixé à l'élément de boîtier externe (36) en forme de pot.
